# EUROPÄISCHE PATENTANMELDUNG

(11) **EP 2 842 848 A1**
(43) Veröffentlichungstag der Anmeldung: **04.03.2015**
(21) Anmeldenummer: 14182798.0
(22) Anmeldetag: 29.08.2014
(51) Int. Cl.: B62H 5/14

(54) **Zweiradständer sowie Zweirad mit einem solchen Zweiradständer**

(30) Priorität: 29.08.2013 DE 202013103905 U
(71) Anmelder: Kick'nlock UG Haftungsbeschränk, 93053 Regensburg (DE)
(72) Erfinder: Friedel, Eckhard, 93047 Regensburg (DE)
(74) Vertreter: Graf Glück Kritzenberger

(57) **Zusammenfassung**

Beschrieben wird ein Zweiradständer mit einem Ständerbein (6, 6a), welches an einem Lagerstück (4), das an einem Rahmen (5) des Zweirades in der Nähe eines Rades (3) befestigbar ist, um eine Schwenkachse AS zwischen einem ausgeklappten und eingeklappten Zustand bewegbar ist und hierfür mit einem ersten Bolzenabschnitt (7.1) im Lagerstück (4) gelagert ist, wobei die Schwenkachse AS gegenüber einer Befestigungsebene (E2) oder der Ebene einer Befestigungsfläche (4.1) des Lagerstücks in einem ersten Winkel (α), vorzugsweise in einem Winkel zwischen 60° und 70° geneigt ist. Der erste Bolzenabschnitt (7.1) ist Bestandteil eines mit dem Ständerbein (6, 6a) drehfest verbundenen Sperrbolzens (7), der mit einem zweiten Bolzenabschnitt (7.2) über eine Seite des Lagerstücks (4) sowie über eine Befestigungsebene (E2) des Lagerstücks wegsteht, wobei der Sperrbolzen (7) derart abgewinkelt ist, dass eine Längserstreckung des ersten Bolzenabschnitts (7.1) und eine Längserstreckung des zweiten Bolzenabschnitts (7.2) einen Winkel β größer als 90°, beispielsweise einen Winkel zwischen 110 und140° miteinander einschließen, der sich bei ausgeklapptem Ständerbein (6, 6a) zu der Befestigungsfläche (4.1) hin öffnet. Ein elektromechanisches Schloss (9) ist zum Verriegeln des Ständerbeins (6, 6a) in seinem ausgeklappten Zustand und damit zum Verriegeln des Sperrbolzens (7) in seinem sperrend in das Rad (3) eingreifenden Zustand vorgesehen, wobei der Sperrbolzen (7) mit seinem zweiten Abschnitt (7.2) mit dem Ständerbein (6, 6a) zwischen einem ein Rad (3) verriegelnden Zustand und einem dieses Rad nicht verriegelnden Zustand bewegbar ist.

## Beschreibung

Die Erfindung bezieht sich auf einen Zweiradständer gemäß Oberbegriff Anspruch 1 sowie auf ein Zweirad gemäß Oberbegriff Anspruch 11.

Zweiradständer mit Ständerbeinen, die an einem Lagerstück, welches zur Befestigung an einem Zweiradrahmen dienen, um eine Schwenkachse zwischen einem eingeklappten, d.h. nicht wirksamen Zustand, und einem ausgeklappten, d.h. wirksamen und das Abstellen des Zweirades ermöglichenden Zustand schwenkbar vorgesehen sind, sind in unterschiedlichen Ausführungen bekannt und sind beispielsweise im Bereich eines Hinterrades am Zweirad befestigt.

Aufgabe der Erfindung ist es, einen Zweiradständer aufzuzeigen, der allein durch das Schwenken seines Ständerbeins in den ausgeklappten Zustand zugleich als Zweiradschloss ein Rad, d.h. bevorzugt das Hinterrad des Zweirades verschließt. Zur Lösung dieser Aufgabe ist ein Zweiradständer entsprechend dem Anspruch 1 ausgebildet. Ein Zweirad mit einem solchen Ständer ist Gegenstand des Anspruches 11.

Der neuerungsgemäße Zweiradständer ist nur an einer Seite des Zweiradrahmens befestigt und im sperrenden Zustand greift der Sperrriegel oder Sperrbolzen von einer Rahmenseite her in das gesperrte Rad bzw. zwischen die Speichen dieses Rades ein.

Der Ausdruck "im Wesentlichen" bzw. "etwa" bzw. "ca." bedeutet im Sinne der Erfindung Abweichungen vom jeweils exakten Wert um +/- 10%, bevorzugt um +/-5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand der Figuren an einem Ausführungsbeispiel näher erläutert. Es zeigen:
- Fig. 1: und 2 einen Fahrradständer gemäß der Erfindung in zwei unterschiedlichen Ansichten;

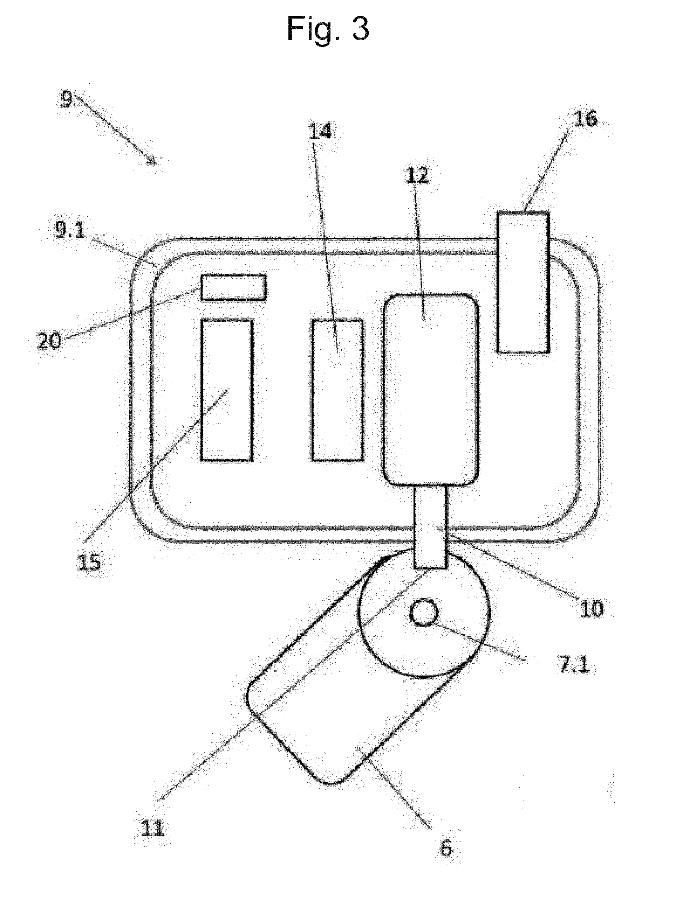

- Fig. 3: in schematischer Funktionsdarstellung ein elektromechanisches Schloss des Fahrradständers der Fig. 1 und 2;
- Fig. 4: in schematischer Darstellung eine Boden-Verriegelung bei einer weiteren Ausführungsform des neuerungsgemäßen Fahrradständers.

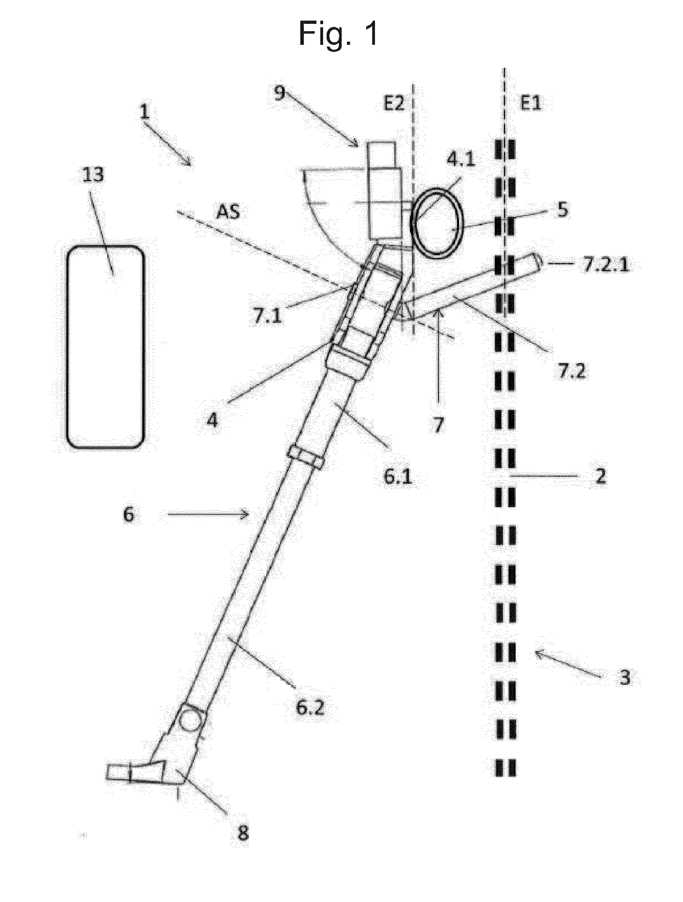

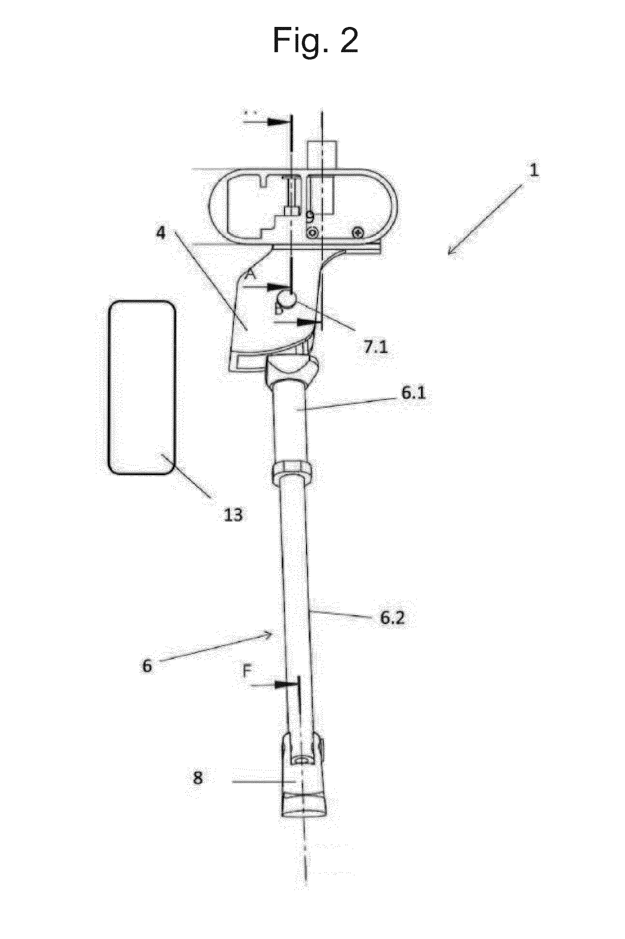

Der in den Fig. 1 und 2 allgemein mit 1 bezeichnete Zweiradständer dient zum Abstellen eines Zweirades, bevorzugt eines Fahrrades im Nichtgebrauchszustand sowie zugleich zum Verriegeln bzw. zum Versperren dieses Zweirades, von dem in der Fig. 1 nur sehr schematisch ein mit Speichen 2 versehenes Hinterrad 3 angedeutet ist.

Der Zweiradständer 1, der in den Fig. 1 und 2 in einem das Abstellen des Zweirades ermöglichenden und zugleich das Hinterrad 3 versperrenden Zustand dargestellt ist, umfasst u.a. ein Lagerelement 4, welches in geeigneter Weise und insbesondere auch manipulationssicher im Bereich einer Montagefläche 4.1 an einem hinteren, horizontalen oder im wesentlichen horizontalen Rahmenelement 5 des Rahmens des Zweirades befestigt ist. Im Lagerstück 4 ist das obere Ende eines Ständerbeins 6 um eine Achse AS schwenkbar gelagert, und zwar zwischen dem in der Fig. 1 dargestellten ausgeklappten, das Abstellen des Zweirades ermöglichenden Zustand und einem eingeklappten, das Fahren des Zweirades ermöglichenden Zustand, und zwar über einen Winkelbereich etwas größer 90°, beispielsweise über einen Winkelbereich 95° bis 110°. Wie insbesondere die Fig. 1 zeigt, ist das Lagerstück 4 gekröpft ausgebildet und auch so an dem Rahmenelement 5 befestigt, dass die Achse AS mit der Ebene E1 des Hinterrades 3 sowie mit einer Befestigungsebene E2, an der das Lagerstück 4 mit der Montagefläche 4.1 an der dem Rad 3 abgewandten Außenseite des Rahmenelementes 5 anliegend befestigt ist, einen Winkel α einschließt, der sich nach oben bzw. zu dem oberhalb der Achse AS angeordneten Rahmenelement 5 hin öffnet und vorzugsweise im Bereich zwischen 60° und 70° liegt, bevorzugt etwa 65° beträgt. DerWinkel α entspricht auch demjenigen Winkel, mit dem sich das Ständerbein 6 im ausgeklappten Zustand schräg über die eine Seite des Zweirades wegerstreckt, d.h. demjenigen Winkel, den die Längserstreckung des Ständerbeins 6 mit der Ebene E1 oder E2 einschließt.

Die Schwenkachse AS des Ständerbeins 6 ist von einem Abschnitt 7.1 eines Sperrbolzens 7 gebildet, dessen Abschnitt 7.1 drehfest mit dem oberen, im Lagerstück 4 aufgenommenen Ende des Ständerbeins 6 verbunden ist und der mit dem Abschnitt 7.1 im Lagerstück 4 dreh- bzw. schwenkbar zweifach gelagert ist. Mit einem zweiten Abschnitt 7.2 steht der Sperrbolzen 7 über die der Ebene E2 und damit dem Hinterrad 3 zugewandte Seite des Lagerstücks 4 vor, und zwar derart, dass der Sperrbolzen 7 bei ausgeklapptem Ständerbein 6 das Hinterrad 3 versperrend zwischen die Speichen 2 eingreift. Beim Einklappen des Ständerbeins 6 wird der Sperrbolzen 7 um die Achse AS derart geschwenkt, dass sich im eingeklappten Zustand der Abschnitt 7.2 vollständig außerhalb des Bewegungsraums der Speichen 2 und seitlich von dem Hinterrad befindet. Die Längserstreckung des Abschnittes 7.2 mit der Längserstreckung des Abschnittes 7.1 und mit der Achse AS einen Winkel β größer als 90° ein, beispielsweise einen Winkel zwischen 110° und 135°, der sich ebenfalls zu dem Rahmenelement 5 bzw. der Montagefläche 4.1 hin öffnet.

Beim Schwenken des Ständerbeins 6 zwischen der herausgeklappten Position und der eingeklappten Position wird das freie Ende 7.2.1 auf einer Kreisbahn um die Achse AS in einer senkrecht zu dieser Achse orientierten und entsprechend dem Winkel α geneigten Ebene derart bewegt, dass sich im eingeklappten Zustand des Ständerbeins 6 der gesamte Abschnitt 7.2 außerhalb des Bewegungsraums Radspeichen 2 befindet.

Zur Anpassung an unterschiedliche Zweiradgrößen ist die Länge des Ständerbeins 6 einstellbar, und zwar bei der dargestellten Ausführungsform dadurch, dass das Ständerbein 6 von zwei teleskopartig ineinandergreifenden und gegeneinander verstellbaren Abschnitten 6.1 und 6.2 gebildet ist. Am unteren Ende weist das Ständerbein 6 ein Fußstück 8 auf.

Zum Verriegeln des Zweiradständers 1 in dem das Zweirad bzw. das Hinterrad 3 versperrenden Zustand ist an der Oberseite des Lagerstücks 4 an diesem ein elektromechanisches Schloss 9 vorgesehen, welches mit einem Sperrriegel oder Sperrstück 10 vorzugsweise in Form eines federbelasteten Schnäppers bei herausgeklapptem Ständerbein 6 in eine Sperrnut 11 eingreift, die am oberen, im Lagerstück 4 aufgenommenen Ende des Ständerbeins 6 vorgesehen ist. Bei in die Sperrnut 11 eingreifendem Sperrstück 10 ist das Ständerbein 6 in seinem herausgeklappten Zustand und damit der Zweiradständer 1 auch in seinem das Hinterrad 3 mit dem Sperrbolzen 7 sperrenden Zustand verriegelt.

Mit Hilfe eines elektromotorischen Antriebs 12 kann der Sperrriegel 10 gesteuert durch eine Fernbedienung13 in eine das Ständerbein 6 freigebende Position bewegt werden, so dass dann das Ständerbein 6 vom Benutzer eingeschwenkt und dabei zugleich das Hinterrad 3 entriegelt werden können. Das Schloss 9 umfasst weiterhin eine mikroprozessorgestützte elektronische Steuerung 14, die u.a. den Antrieb 12 ansteuert, als Empfänger für ein Funksignal der Fernbedienung 13 ausgebildet ist und insbesondere auch überprüft, ob die mit dem Funksignal der Fernbedienung 13 empfangene Identifizierung der für das Öffnen des elektromechanischen Schlosses 9 autorisierten Identifizierung entspricht. Für die Versorgung der elektronischen Steuerung 14 und des elektromechanischen Antriebs 12 ist weiterhin eine wieder aufladbare Batterie 15 vorgesehen. Sämtliche Funktionselemente des elektromechanischen Schlosses 9 sind in einem Gehäuse 9.1 hermetisch verschlossen und auch manipulationssicher untergebracht. Das Gehäuse 9.1 ist seinerseits manipulationssicher an dem Lagerstück 4 befestigt.

Um bei einem Ausfall der Stromversorgung durch die Batterie 15 und/oder bei einem Defekt der elektronischen Steuerung 14 dennoch ein Sperren und Entsperren des Schlosses 9 zu ermöglichen, weist dieses zusätzlich einen mechanischen Schließzylinder 16 auf, so dass mit einem passenden Schlüssel über den Schließzylinder 16 der Sperrriegel 10 in seine sperrende und/oder nicht sperrende Stellung bewegt werden kann.

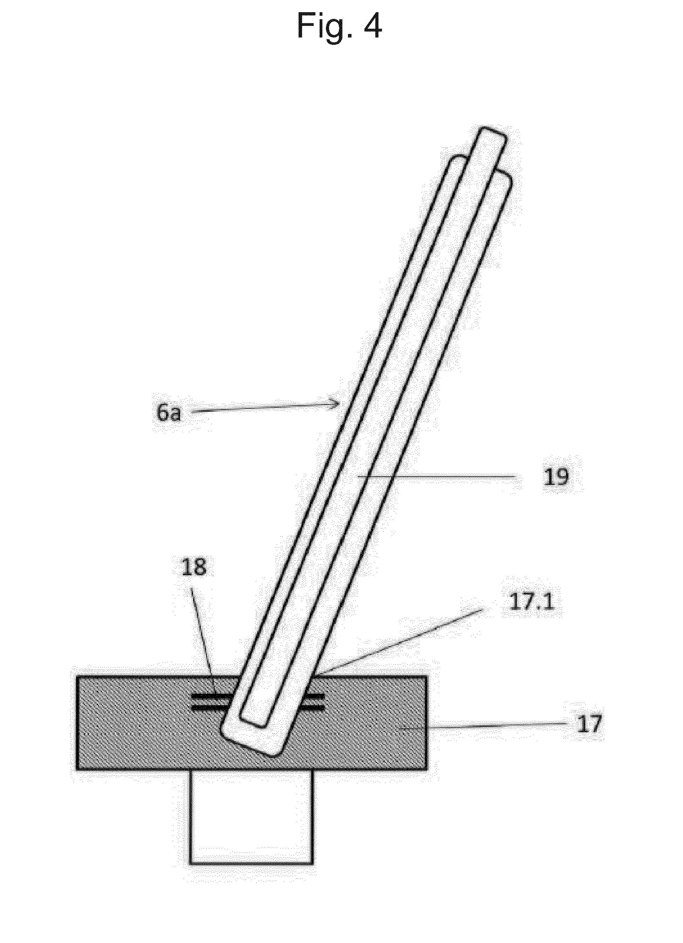

Die Fig. 4 zeigt in einer sehr schematischen Darstellung als weitere Ausführungsform ein Ständerbein 6a, das Teil des Zweiradständers 1 ist und dessen unteres Ende beim Abstellen des Zweirades an einem im Untergrund fest verankernden Haltestück 17 verankert werden kann, so dass auch ein Wegtragen des mit dem Zweiradständer 1 versperrten Zweirades nicht möglich ist. Hierfür weist das Ständerbein 6a an seinem unteren Ende beispielsweise radial überstehende, z.B. gefederte Sperrriegel 18 auf, die sich nach dem Einführen des Ständerbeines 6a in eine Ausnehmung 17.1 des Haltestücks 17 an diesem bzw. an dort vorgesehenen Hinterschneidungen verriegeln. Im Ständerbein 6 ist wenigstens eine Welle 19 vorgesehen, die z.B. beim Entsperren des Zweiradständers gedreht und/oder axial bewegt wird und dabei über Steuerflächen das Zurückbewegen der Sperrriegel 18 in ihre nicht sperrende Stellung bewirkt. Bevorzugt ist das Haltestück 17 an seiner Oberseite linsenkopfartig gewölbt.

Bevorzugt ist das Schloss 9 weiterhin so ausgeführt, dass sich bei einer längeren Standzeit zumindest der Empfangsteil der Elektronik 14 selbsttätig abschaltet und erst durch manuelle Betätigung des Benutzers, beispielsweise durch Berühren über einen im Gehäuse 9.1 untergebrachten Rüttelschalter 20 wieder aktiviert wird. Der Rüttelschalter 20 ist ebenso wie die anderen Funktionselemente nach außen hin hermetisch und manipulationssicher verschlossen in dem Gehäuse 9.1 untergebracht.

Beim Einbau des Zweiradständers 1 in ein Zweirad kann durch einen zusätzlichen Kontakt oder eine zusätzliche Steuerfunktion über die Fernbedienung 13 die Betätigung des Antriebs 12 vermieden werden. Weiterhin kann mit einer weiteren Funktion über die Fernbedienung 13 das Licht des Zweirades ein- und ausgeschaltet werden.

Die Fernbedienung erfolgt beispielsweise mit einer Frequenz im ISM-Band. Insbesondere besteht auch die Möglichkeit, die Fernbedienung des Schlosses 9 über eine Bluetooth-Funkverbindung zu realisieren, so dass dann das Entriegeln, aber ggf. auch das Verriegeln des Schlosses 9 über ein Handy bzw. über eine spezielle, auf dem Handy installierte Applikation erfolgen und das Handy die Fernbedienung 13 bildet.

Bei Verwendung des Rüttelsensors 20 kann dieser auch zur Auslösung eines akustischen und/oder optischen Alarmsignals führen, beispielsweise auch an der Fernbedienung 13 und/oder an einem Handy des Zweiradbesitzers. Weiterhin besteht die Möglichkeit, das jeweilige Haltestück 17 so auszubilden, dass nach dem Andocken und/oder Verriegeln des Ständerbeins 6 am Haltestück 17 über dieses Haltestück und den Ständerarm 6 eine Aufladung der Batterie 15 des Schlosses 9 sowie bei Verwendung des Zweiradständers 1 an einem Elektrofahrrad auch ein Aufladen der Batterie des Elektrofahrrads erfolgen.

Insbesondere dient der Rüttelschalter 20 oder ein anderes im Gehäuse 9.1 untergebrachtes Sensorelement zur Abgabe eines Alarmsignals bei einem unbefugten Öffnen des Gehäuses 9.1.

Bei dem elektromechanischen Schloss 9 sind an der Außenseite des Gehäuses 9.1 vorgesehene elektrische Betätigungselemente vermieden, über die eine Manipulation des Schlosses 9 und der Funktion dieses Schlosses ermöglichen könnte.

Die Erfindung wurde voranstehend an einem Ausführungsbeispiel beschrieben. Es versteht sich, dass zahlreiche weitere Änderungen sowie Abwandlungen möglich sind, ohne dass dadurch der der Erfindung zugrundeliegende Erfindungsgedanke verlassen wird.

### Bezugszeichenliste

- 1: Zweiradständer
- 2: Radspeiche
- 3: Hinterrad
- 4: Lagerstück
- 4.1: Befestigungs- oder Montagefläche
- 5: Rahmenelement des Zweirades
- 6: Ständerbein
- 6a: Ständerbein
- 6.1, 6.2: Abschnitt
- 7: Sperrbolzen
- 7.1, 7.2: Abschnitt des Sperrbolzens
- 8: Fuß
- 9: elektromechanisches Schloss
- 9.1: Schloßgehäuse
- 10: Sperrstück
- 11: Sperrnut
- 12: elektromotorischer Antrieb
- 13: Fernbedienung
- 14: Steuerelektronik
- 15: Batterie
- 16: Zylinderschloss
- 17: Haltestück
- 18: Verriegelung
- 19: Welle
- 19.1: Steuerfläche oder Exzenter
- 20: Rüttelkontakt
- E1: Radebene
- E2: Ebene der Befestigungsfläche 4.1
- AS: Schwenkachse des Ständerbeins 6, 6a und des Sperrbolzens 7

## Patentansprüche

1. Zweiradständer mit einem Ständerbein (6, 6a), welches an einem Lagerstück (4), das an einem Rahmen (5) des Zweirades in der Nähe eines Rades (3) befestigbar ist, um eine Schwenkachse (AS) zwischen einem ausgeklappten und eingeklappten Zustand bewegbar ist und hierfür mit einem ersten Bolzenabschnitt (7.1) im Lagerstück (4) gelagert ist, wobei die Schwenkachse (AS) gegenüber einer Befestigungsebene (E2) oder der Ebene einer Befestigungsfläche (4.1) des Lagerstücks in einem ersten Winkel (α), vorzugsweise in einem Winkel zwischen 60° und 70° geneigt ist, **dadurch gekennzeichnet,**
**dass** der erste Bolzenabschnitt (7.1) Bestandteil eines mit dem Ständerbein (6, 6a) drehfest verbundenen Sperrbolzens (7) ist, der mit einem zweiten Bolzenabschnitt (7.2) über eine Seite des Lagerstücks (4) sowie über eine Befestigungsebene (E2) des Lagerstücks wegsteht,
**dass** der Sperrbolzen (7) derart abgewinkelt ist, dass eine Längserstreckung des ersten Bolzenabschnitts (7.1) und eine Längserstreckung des zweiten Bolzenabschnitts (7.2) einen Winkel (β) größer als 90°, beispielsweise einen Winkel zwischen 110° und 140° miteinander einschließen, der sich bei ausgeklapptem Ständerbein (6, 6a) zu der Befestigungsfläche (4.1) hin öffnet, dass ein elektromechanisches Schloss (9) zum Verriegeln des Ständerbeins (6, 6a) in seinem ausgeklappten Zustand und damit zum Verriegeln des Sperrbolzens (7) in seinem sperrend in das Rad (3) eingreifenden Zustand vorgesehen ist, und
**dass** der Sperrbolzen (7) mit seinem zweiten Abschnitt (7.2) mit dem Ständerbein (6, 6a) zwischen einem ein Rad (3) verriegelnden Zustand und einem dieses Rad nicht verriegelnden Zustand bewegbar ist.

2. Zweiradständer nach Anspruch 1, **dadurch gekennzeichnet, dass** das Schloss (9) ein elektromechanisches Schloss ist.

3. Zweiradständer nach Anspruch 2, **dadurch gekennzeichnet, dass** das Schloss (9) ein mit Hilfe einer Fernbedienung (13) entriegelbares Schloss ist.

4. Zweiradständer nach Anspruch 3, **dadurch gekennzeichnet, dass** das Schloss (9) ein mit Hilfe der Fernbedienung (13) auch verriegelbares Schloss ist.

5. Zweiradständer nach einem der vorhergehenden Ansprüche, **dadurch gekennzeichnet, dass** das Schloss in einem hermetisch verschlossenen Schlossgehäuse (9.1) einen elektromotorischen Antrieb (12) zum Betätigen eines Sperrriegels (10), eine elektronische Steuerung (14), die vorzugsweise auch als Fernbedienungsempfänger ausgebildet ist, sowie eine wieder aufladbare Batterie (15) aufweist.

6. Zweiradständer nach einem der vorhergehenden Ansprüche, **dadurch gekennzeichnet, dass** das Schloss (9) einen mechanischen Schließzylinder (16) zum Sperren und/oder Entsperren des Ständerbeins (6, 6a) aufweist.

7. Zweiradständer nach einem der vorhergehenden Ansprüche, **dadurch gekennzeichnet, dass** das Schloss (9) in dem Schlossgehäuse (9.1) wenigstens einen Sensor (20), vorzugsweise Rüttelsensor aufweist, der für die Erzeugung eines Alarmsignals bei einer Manipulation am Schloss (9) oder Zweirad ausgebildet ist.

8. Zweiradständer nach einem der vorhergehenden Ansprüche, **dadurch gekennzeichnet, dass** das Ständerbein (6) in seiner Länge verstellbar ist.

9. Zweiradständer nach einem der vorhergehenden Ansprüche, **gekennzeichnet durch** ein im Untergrund oder Boden fest verankerbares Haltestück (17), an welchem das Ständerbein (6a) mit einem dem Haltestück (4) entfernt liegenden Ende verriegelbar oder über das Schloss (9) oder ein weiteres Schloss entriegelbar ist.

10. Zweiradständer nach Anspruch 9, **dadurch gekennzeichnet, dass** das Haltestück (17) als Andockstation für ein Laden der Batterie (15) des Schlosses und/oder einer Batterie eines Elektrofahrrades über das Ständerbein (6, 6a) ausgebildet ist.

11. Zweirad mit einem Zweiradständer zum Abstellen des Zweirades, **dadurch gekennzeichnet, dass** der Zweiradständer nach einem der vorhergehenden Ansprüche ausgebildet und derart an einem Rahmenelement (5) des Zweirades befestigt ist, dass die Schwenkachse (AS) des Ständerbeins (6, 6a) einen Winkel (α) kleiner als 90°, beispielsweise einen Winkel zwischen 60° und 70° mit einer Ebene (E1) des Rades (3) einschließt.
